**Europäisches Patentamt**

**European Patent Office**

**Office européen des brevets**

(11) Numéro de publication: **0 128 090**
**B1**

(12) **FASCICULE DE BREVET EUROPÉEN**

(45) Date de publication du fascicule du brevet:
17.12.86

(51) Int. Cl.⁴: **B 23 Q 7/14**

(21) Numéro de dépôt: **84401112.2**

(22) Date de dépôt: **30.05.84**

(54) **Dispositif de palettisation pour machines-outils.**

(30) Priorité: **01.06.83 FR 8309063**

(43) Date de publication de la demande:
**12.12.84 Bulletin 84/50**

(45) Mention de la délivrance du brevet:
**17.12.86 Bulletin 86/51**

(84) Etats contractants désignés:
**AT BE CH DE FR GB IT LI LU NL SE**

(56) Documents cité:
**FR-A-2 453 709**
**FR-A-2 511 626**
**JP-A-56 009 153**

**MACHINES & TOOLING, vol. 51, no. 8, 1980, pages
3-5, Melton Mowbray, Leicestershire, GB, L.M.
Kordysh: "Automatic workpiece changing on
machining centres"**
**MACHINES PRODUCTION, no. 349, 27 avril 1983,
pages 19-26, Boulogne, FR, F. Werner: "Spécialiste
de la cellule flexible"**

(73) Titulaire: **COMPAGNIE INTELAUTOMATISME, 80,
rue des Meuniers, F-92220 Bagneux (FR)**

(72) Inventeur: **Sachot, Michel, 55, rue Curie, F-91400
Saclay (FR)**

(74) Mandataire: **Loyer, Yves, CABINET PIERRE LOYER
18, rue de Mogador, F-75009 Paris (FR)**

LIBER, STOCKHOLM 1986

## Description

L'évolution des techniques de la machine-outil conduit à charger la table de la machine au moyen de tables auxiliaires ou palettes sur lesquelles les pièces à usiner sont placées et bridées à l'avance, ces palettes étant disposées sur des supports et déplacées par tous moyens appropriés entre la table de la machine et un ou plusieurs postes de chargement et de déchargement, le transfert d'une palette entre la table de la machine et un support étant effectué généralement par glissement ou roulement.

Cette technique a pour but de réduire les temps morts de la machine (chargement et déchargement des pièces) et par suite d'augmenter sa productivité, en permettant le chargement d'une deuxième palette lorsque la première est sur la machine et en cours d'usinage.

Ce système de palettisation présente toutefois des difficultés de réalisation et d'emploi lorsqu'il s'agit de pièces de grandes dimensions du fait que le support fixe comprend deux postes de palettes placés côte à côte, ce qui rend difficile l'accès à toutes les parties des palettes.

Pour surmonter ces difficultés, on a déjà proposé l'utilisation de supports palettiseurs en forme de chariots mobiles qui se déplacent avec une palette entre poste de chargement et de déchargement et table. Etant donné que ce poste est à distance de la table de la machine, l'accessibilité à la palette pour les opérations de chargement et déchargement peut être excellente, mais ce système, d'une réalisation coûteuse et compliquée, utilise une grande surface au sol.

Une autre solution consiste à utiliser deux supports fixes placés à chaque extrémité de la table. Cette solution a pour inconvénient de placer les postes de chargement et déchargement de part et d'autre de la machine, d'entraîner des manutentions supplémentaires, et elle occupe également une surface au sol relativement grande.

On a également proposé d'employer un palettiseur rotatif placé en bout de table: cette solution occupe également une importante surface au sol, elle est de réalisation difficile pour les pièces lourdes et présente des risques pour l'opérateur, la sécurité étant difficile à assurer.

La solution selon l'invention consiste en un dispositif de palettisation pour machines-outils comportant des tables auxiliaires ou palettes susceptibles d'être transférées sur la table de la machine à partir d'un support palettiseur, caractérisé en ce que le support palettiseur est un chariot mobile comprenant deux caissonssupports de deux palettes, disposés parallèlement et à distance l'un de l'autre selon la direction transversale à la direction de déplacement longitudinal des palettes, ces caissons étant reliés rigidement par des traverses, munis de moyens permettant le déplacement comme par exemple des roues fixées au chariot roulant sur le rail de guidage fixé au sol, lesdits moyens permettant le déplacement du chariot avec guidage dans la direction transversale; chaque caisson comprenant son propre mécanisme de commande et de guidage de la translation longitudinale des palettes, et des moyens étant prévus pour assurer et commander un déplacement transversal du chariot d'amplitude au moins égal à l'entraxe des caissons.

Cet ensemble, disposé de sorte que la direction transversale de déplacement soit parallèle à l'axe des x de la machine, constitue un chariot transversal de présentation des palettes à l'une des extrémités de table de la machine. Le chargement et le déchargement peuvent ainsi être exécutés à proximité de la machine, mais avec un accès aux palettes excellent du fait de l'espace séparant les caissons supports, espace qui sera suffisant pour permettre le passage et les mouvements d'un opérateur, c'est-à-dire au moins égal à environ 0,60 m et de préférence de l'ordre de 0,80 m.

De préférence, les bords inférieurs longitudinaux du chariot palettiseur comportent des barres de sécurité placées au niveau du sol et commandent l'arrêt du chariot en cas d'obstacle rencontré au sol.

Ces dispositions ainsi que d'autres caractéristiques préférées de l'invention sont décrites ci-après en référence au dessin annexé sur lequel:

La figure 1 est un croquis schématique d'ensemble d'un dispositif selon une réalisation de l'invention;

La figure 2 est une vue schématique de dessus d'un tel dispositif;

La figure 3 est une vue en élévation selon B-B de la figure 2;

La figure 4 est une vue en coupe selon A-A de la figure 2;

La figure 5 est une coupe schématique d'un exemple de système de bridage sur la table de la machine.

En se reportant à ces figures, on voit que le palettiseur selon l'invention est formé de deux caissons jumeaux 1 et 2 portant les palettes 3 et 4 disposés parallèlement et à distance et reliés entre eux rigidement par des traverses 47 supportant une plate-forme intermédiaire 5; cet ensemble est monté sur des roues ou galets 31, 32, d'axe parallèle à la direction longitudinale 4 des palettes et comprend au moins un rail de guidage transversal 6 fixé au sol ou l'équivalent. L'entraînement transversal T du chariot est, par exemple, assuré par un pignon 33 entraîné par un moto-réducteur 7 coopérant avec une crémaillère 34 portée par le chariot palettiseur 1, 2, 5. Chaque caisson 1 ou 2 comporte ses propres moyens de commande des déplacements longitudinaux de la palette, tels que par exemple une chaîne 8 entraînée par un moteur 35 logé dans le caisson correspondant.

En 9 se trouve schématisé le bâti de la machine avec sa table l0 sur laquelle se placent les palettes 3 ou 4. Pour le passage d'une palette depuis un caisson du chariot jusqu'à la table 10, il est prévu une fausse table et des allonges de glissières 11, placées en bout de table et reposant par leurs extrémités 12 sur des supports prévus sur les caissons (par exemple sur les extrémités des glissières 13 des caissons).

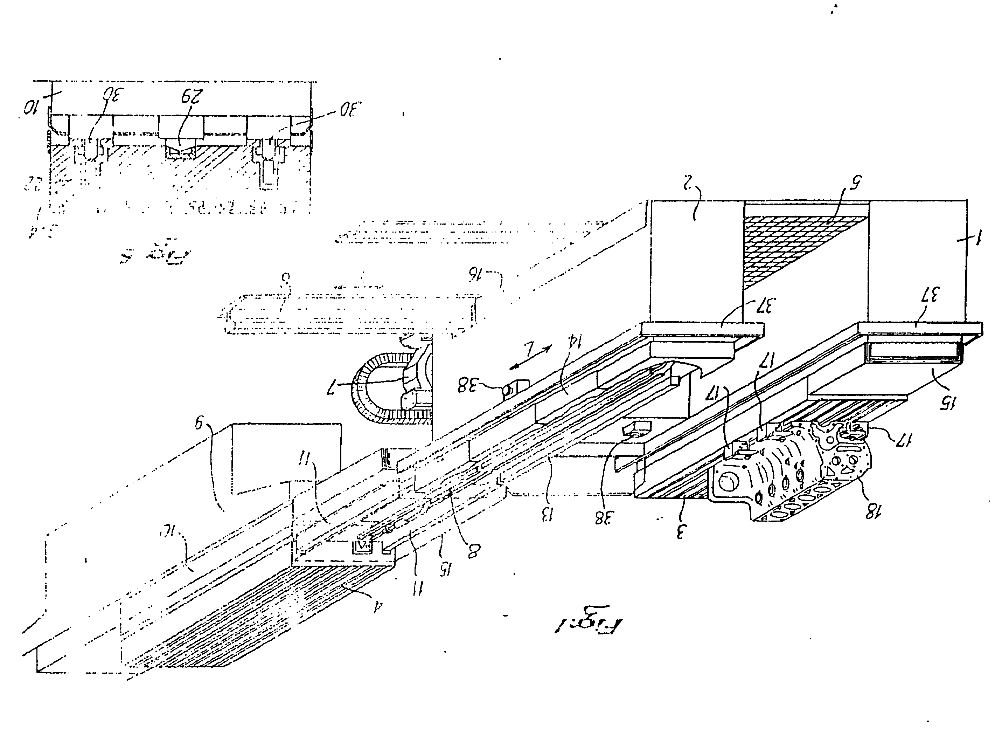

Chaque caisson porte son système de glissières 13 et de couvre-glissières 14. A chaque palette 3, 4 est associé un élément de couvre-glissières 15 qui vient se placer sur les couvres-glissières 14 lorsque la palette est sur un caisson et sur les allonges de glissières 11, lorsque la palette est fixée sur la table 10 (en traits interrompus sur la figure 1).

Les bords longitudinaux externes des caissons 1 et 2 sont munis d'une barre ou plaque oscillante 16 placée à leur partie inférieure à proximité du sol et qui commande l'arrêt du chariot palettiseur en cas d'obstacle au sol. Cette disposition de sécurité protège les opérateurs en provoquant l'arrêt des déplacements transversaux (par toute commande électrique appropriée) lorsque la barre ou plaque 16 heurte les pieds de l'opérateur.

Le chariot palettiseur est fixé au sol face à une extrémité de la table 10 de la machine et l'amplitude de ses mouvements transversaux T est au moins égale à l'entraxe des caissons 1 et 2 ou de leurs systèmes de glissières 13 de sorte que les palettes 3 et 4 peuvent être placées alternativement en regard et coaxialement à la table 10.

Le fonctionnement du dispositif est le suivant:

Pendant qu'une pièce se trouve en cours d'usinage sur la palette 4 placée sur la table 10, la pièce à usiner ensuite est placée sur la palette 3, en 18 (figure 1) et bridée à l'avance par les moyens de bridage 17.

L'opération d'usinage étant terminée, le caisson 2 est placé devant la table 10 et la palette 4 est ramenée sur le caisson 2. Le chariot 1, 5, 2 est alors déplacé vers la droite jusqu'à placer la palette 3 face à la table 10.

La palette est alors translatée sur la table 10. Le déchargement de la palette 4 et son chargement peuvent alors être effectués pendant le cours de l'usinage de la pièce 18.

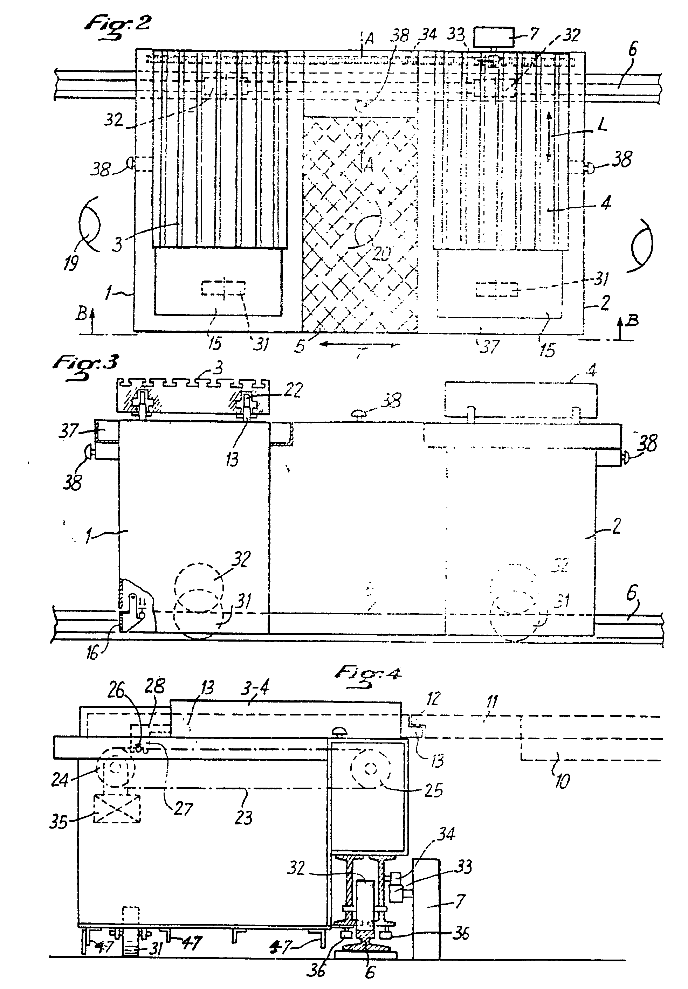

La figure 2 montre la disposition des postes de travail 19, 20, 21 et illustre la très grande accessibilité aux pièces réalisée par le dispositif de l'invention.

Les moyens employés pour assurer les déplacements longitudinaux des palettes et leur guidage, ainsi que leur positionnement et leur bridage sur la table 10 pourront être variés.

Par exemple, les palettes 3, 4 pourront porter des galets 22 roulant sur les glissières 13 des caissons, les déplacements étant assurés par une chaîne poussante 8 (figure 1) ou en variante (figure 4) par une chaîne sans fin 23 tendue entre deux poulies 24, 25, comportant un galet 26 coopérant avec un taquet 27 relié à la palette par la barre 28 (figure 4); le positionnement sur la table 10 pourra être assuré par un plot central 29 (ou une pluralité de plots latéraux) tandis que des vérins portés par la table de la machine abaissent les glissières 30 de la table 10 sur lesquelles roulent les galets 22, glissières qui ont une section en T et dont les ailes viennent brider la palette sur la table.

Ces dispositions ainsi que d'autres également utilisables sont connues en soi.

Sur la figure 1, on a représenté un rail support pour le roulement des roues 31. Cette disposition n'est pas indispensable et les roues 31 peuvent rouler directement au sol.

L'entraînement transversal du chariot 1, 2, 5 peut également être réalisé en rendant motrice l'une des roues 32. le moteur 7 pouvant être porté par le chariot, et le positionnement du chariot peut être assuré par des butées de fin de course actionnant des interrupteurs. Cette disposition supprime l'entraînement par pignon 33 et crémaillère 34.

Dans l'exemple représenté, on a également prévu un guidage latéral par galets 36 coopérant avec le rail 6; le guidage latéral peut être également réalisé en utilisant des roues 32 à jantes.

Les caissons 1, 2 comportent en outre des gouttières latérales 37 de récupération de copeaux et de liquide de coupe, ainsi que des commandes 38 d'arrêt du dispositif placées devant les différents postes de travail.

## Revendications

1. Dispositif de palettisation pour machines-outils comportant des tables auxiliaires ou palettes (3, 4) susceptibles d'être transférées sur la table (10) de la machine à partir d'un support palettiseur, caractérisé en ce que le support palettiseur est un chariot mobile comprenant deux caissonssupports (1 et 2) de deux palettes (3 et 4), disposés parallèlement et à distance l'un de l'autre selon la direction (T) transversale à la direction de déplacement longitudinal (L) des palettes, ces caissons (1 et 2) étant reliés rigidement par des traverses (37), munis de moyens permettant le déplacement comme par exemple des roues (31, 32) fixées au chariot roulant sur un rail de guidage (6) fixé au sol, lesdits moyens permettant le déplacement du chariot avec guidage dans la direction transversale (T), chaque caisson (1, 2) comprenant son propre mécanisme (8, 35, 13) de commande et de guidage de la translation longitudinale des palettes (3, 4), et des moyens (7, 34, 33) étant prévus pour assurer et commander un déplacement transversal du chariot d'amplitude au moins égal à l'entraxe des caissons (1, 2).

2. Dispositif selon la revendication 1, caractérisé en ce que les moyens de commande et de guidage de la translation des palettes portés par chaque caisson (1, 2) comprennent des glissières (13), une chaîne d'entraînement (8, 23) par un moteur (35), des couvre-glissières (14) et un couvre-glissière (15) associé à la palette (3, 4), des allonges de glissières (11) étant en outre prévues pour couvrir la distance séparant les caissons de la table (10) de la machine.

3. Dispositif selon l'une quelconque des revendications précédentes, caractérisé en ce que l'entraînement transversal du chariot est obtenu par un moteur fixé au sol entraînant un pignon (33) coopérant avec une crémaillère (34) portée par le chariot (1, 2, 5).

4. Dispositif selon l'une des revendications 1 et 2. caractérisé en ce que l'entraînement transversal du chariot palettlieur est obtenu par un moteur porté par le chariot et entraînant au moins une des roues (32) du chariot.

5. Dispositif selon l'une quelconque des revendications précédentes. caractérisé en ce qu'à la partie inférieure des côtés longitudinaux externes des caissons sont prévues des barres ou plaques oscillantes (16), à proximité du sol, commandant l'arrêt du déplacement transversal.

6. Dispositif selon l'une quelconque des revendications précédentes, caractérisé en ce que la table (10) de la machine est munie de moyens de positionnement et de bridage des palettes (3, 4).

7. Dispositif selon l'une quelconque des revendications précédentes, caractérisé en ce que la largeur libre entre caissons est de l'ordre de 0,80 m.

**Patentansprüche**

1. Palettierungsvorrichtung für Werkzeugmaschinen, bestehend aus Nebentischen bzw. Paletten (3, 4), die von einer Palettenauflage auf den Maschinentisch (10) geschoben werden können. Die Palettenauflage ist dadurch gekennzeichnet, dass sie einen beweglichen Wagen darstellt mit zwei Kastenauflagen (1 + 2) für zwei Paletten (3 + 4), die parallel zueinander und in einem bestimmten Abstand voneinander angeordnet sind, nämlich in der Richtung (T) quer zur Längsrichtung (L) der Palettenverschiebung, wobei die Kästen (1 + 2) durch Traversen (37) fest miteinander verbunden und mit Mitteln ausgestattet sind, die eine Verschiebung ermöglichen, wie zum Beispiel am Rollwagen befestigte Räder (31, 32) auf einer Fürungsschiene (6) die am Boden angebracht ist, so dass die gennanten Mittel die Verschiebung des Wagens anhand einer Führungsschiene in Querrichtung (T) gestatten, wobei jeder Kasten (1, 2) eine eigene Vorrichtung (8, 35, 13) zur Steuerung und Führung der Längsverschiebung der Paletten (3, 4) besitzt, sowie Mittel (7, 34, 33) zur Ausführung und Steuerung von Querverschiebungen des Wagens auf einer Breite, die mindestens dem Mittenabstand der Kästen (1, 2) entspricht.

2. Palettierungsvorrichtung nach Anspruch 1, dadurch gekennzeichnet, dass die Mittel zur Steuerung und Führung der Verschiebung der auf den Kästen (1, 2) aufliegenden Paletten Laufschienen (13), eine Kette (8, 23) mit Antriebsmotor (35), Laufschienenabdeckungen (14) und eine Laufschienenabdeckung (15), die der Palette (3, 4) zugeordnet ist, sowie Laufschienenfortführungen (11) umfassen, die unter anderem dazu dienen, den Abstand zwischen den Kästen und dem Maschinentisch (10) zu überbrücken.

3. Palettierungsvorrichtung nach einem der Ansprüche 1 bis 2, dadurch gekennzeichnet, dass der Querantrieb des Wagens durch einen am Boden verankerten Motor erfolgt, der ein Zahnrad (33) antreibt, das mit einer Zahnstange (34) zusammenwirkt, die am Wagen (1, 2, 5) angebracht ist.

4. Palettierungsvorrichtung nachdeinender Anspruche 1 bis 2, dadurch gekennzeichnet, dass der Querantrieb des Palettierungswagens durch einen Motor erfolgt, der am Wagen angebaut ist und nindestens ein Wagenrad (32) antreibt.

5. Palettierungsvorrichtung nach einem der Ansprüche 1 bis 4, dadurch gekennzeichnet, dass am Unterteil der äusseren Längsseiten der Kästen in Eodennähe hin- und herbewegliche Stangen oder Platten (16) vorgesehen sind, die das Anhalten des Wagens bei der auerbewegung steuern.

6. Palettierungsvorrichtung nach einen der Ansprüche 1 bis 5, dadurch gekennzeichnet, dass der Maschinentisch (10) mit Mitteln zur Positionierung und Einspannung der Paletten (3, 4) ausgestattet ist.

7. Palettierungsvorrichtung nach einen der Ansprüche 1 bis 6, dadurch gekennzeichnet, dass die lichte Weite zwischen den Kästen ungefähr 0,80 m beträgt.

**Claims**

1. A palletization device for machine tools comprising auxiliary tables or pallets (3, 4) capable of being transferred onto the table (10) of the machine from a palletizer support, characterized in that the palletizer support is a mobile carriage comprising two box-shaped structures (1, 2) respectively supporting two pallets (3, 4), arranged parallel to each other at a spacing from each other along the direction (T) transversal to the longitudinal displacement direction (L) of the pallets, these boxes (1, 2) being rigidly linked together by cross-bars (47) and provided with means allowing them to be displaced such as for instance wheels (31, 32) fixed to the carriage rolling on a guide rail (6) fixed to the ground, said means allowing the carriage to travel while being guided along the transversal direction (T), each box (1, 2) comprising its own mechanism (8, 35, 13) for driving and guiding the longitudinal translation of the pallets (3, 4), and means (7, 34, 33) being provided for effecting and controlling a transversal displacement of the carriage with an amplitude at least equal to the spacing between the centerlines of the boxes (1, 2).

2. A device according to claim 1, characterized in that the means for driving and guiding the translation of the pallets carried by each box (1, 2) comprise slides (13), a driving chain (8, 23) driven by a motor (35), slide covers (14) and a further slide cover (15) associated with the pallet (3, 4), slide extensions (11) being further provided for covering up the distance separating the boxes from the machine table (10).

3. A device according to any of the above claims, characterized in that the transversal drive of the carriage is effected by a motor fixed to the ground driving a pinion (33) which cooperates with a rack (34) carried by the carriage (1, 2, 5).

4. A device according to either of claims 1 and 2, characterized in that the transversal drive of the palletizer carriage is effected by a motor carried by the carriage and driving at least one of the carriage wheels (32).

5. A device according to any of the above claims, characterized in that swinging bars or plates (16) are provided on the lower part of the external longitudinal sides of the boxes, close to the ground, for bringing the transversal displacement to a standstill in an emergency.

6. A device according to any of the above claims, characterized in that the machine table (10) is provided with means for positioning and clamping the pallets (3, 4).

7. A device according to any of the above claims, characterized in that the free width between the box-shaped structures (1, 2) is of the order of 0.80 m.

Fig. 1

Fig. 5

Fig. 2

Fig. 3

Fig. 4

0 128 090